# EUROPEAN PATENT APPLICATION

(11) **EP 1 122 957 A1**
(43) Date of publication of application: **08.08.2001**
(21) Application number: 00400278.8
(22) Date of filing: 02.02.2000
(51) Int. Cl.: H04N 13/02, H04N 13/04

(54) **Three-dimensional display apparatus**

(71) Applicant: THOMSON multimedia, 92100 Boulogne Billancourt (FR)
(72) Inventor: Chikazawa, Yoshiharu, 92100 Boulogne-Billancourt (FR)
(74) Representative: Ruellan-Lemonnier, Brigitte

(57) **Abstract**

The invention concerns a three dimensional (3D) display apparatus comprising a passive array (16) of points (a, b, c) and an array (14) representing the image to be displayed, this second array comprising a set of subarrays (A', B', C'). Each subarray is associated with a corresponding point of the passive array, and each point of each subarray contains an information about a point of the 3D image to display. A light ray from a point (A'5) of a subarray to the associated point (a) of the passive array virtually converges to the corresponding point (P₁) of the 3D image.

The display comprises means for controlling the position of the 3D image (P₁Q₁) with respect to the arrays through the control of the direction of said light rays (A'5a, A'7a).

Preferably, means are provided for controlling the distance (d) between the passive array (16) and the second array (14).

## Description

The invention relates to a three dimensional (3D) display of the integral photography type.

For the display of static or dynamic 3D images only the holographic method and the integral photography method are such that, on one hand, the viewer does not need to wear glasses and, on the other hand, the position of the eyes with respect to the display is not critical in order to obtain a correct 3D image.

Compared to the holographic method, the integral photography has the advantage of a greater simplicity.

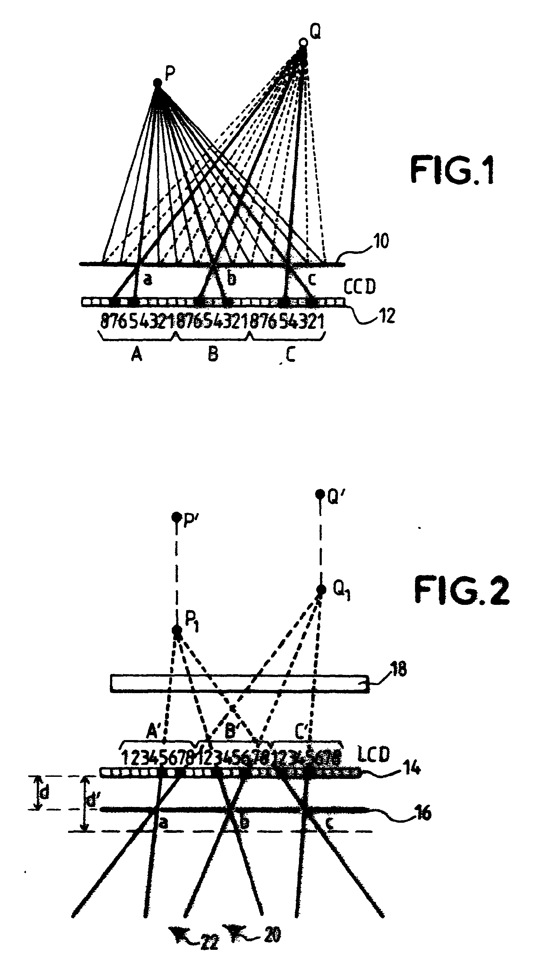

This known integral photography method will be explained herein after with reference to figure 1 and figure 2.

Figure 1 shows the principle of image capturing. The image capturing equipment comprises an array 10 of holes (or apertures) or lenses a, b, c ... At a given distance d of this array 10 is provided a set 12 of detectors A, B, C ... such as CCDs.

Each of those detectors has a predetermined number of detecting elements; this predetermined number is 8 in this simplified example. To each detecting element corresponds a pixel of a flat surface display (for example a liquid crystal display LCD) 14 of the image-reproducing device represented on figure 2. When a CCD detecting element receives light, the corresponding display pixel becomes transparent with a transmission coefficient which depends on the light intensity received by the CCD element.

In the example shown on figure 1 an object point P illuminates the detector elements A5, B3, C2 and the object point Q illuminates the detector elements A7, B6 and C5.

The correspondence between CCD elements and display pixels is such that to each CCD detector A, B, C ... corresponds a reproducing section A', B', C' and the order of the pixels in each reproducing section (A' for example) is inverted with respect to the order of the CCD elements in the corresponding (A) CCD detector. For example on figure 1 the CCD element A1 is on the right part of CCD detector A and, on figure 2, the corresponding pixel element A'1 is on the left part of this section.

The control of display 14 from signals provided by CCD 12, including the inversion, is realized by a processor not shown on figures 1 and 2.

The reproducing apparatus comprises an array 16 of holes or apertures, or lenses (passive array) corresponding to the array 10 of the image-capturing device. This array 16 is associated to the flat surface display 14 and to a light source 18 in such a way that light emitted by source 18 crosses the display 14 and, afterwards, the holes of array 16. If the array 16 is identical to the array 10 of the capturing device and if the inverted relative positions of pixel elements A'1, A'2, ..., B'1, B'2, ... are the same as the relative positions of CCD element, A1, A2, ... B1, B2, ... the distance d between array 16 and display 14 is equal to the distance between array 10 and CCD 12.

The light rays A'5a, B'3b, and C'2c converge virtually to point P₁. The light rays A'7a, B'6b and C'5c converge virtually to point Q1. The respective positions of points P₁ and Q₁ are exactly the same as the respective positions of original points P and Q. In other words the integral photography 3D display provides a true 3D image of the original object if there is perfect correspondence between detecting elements and corresponding pixels of flat display, for example LCD 14.

The arrays 10 and 16 may be replaced by arrays of small lenses or equivalent means.

The invention is based on the recognition that the position of the reproduced object, even if it corresponds exactly to the original position of the object, may not be the optimum position for the viewer. For instance, depending on the scene, the viewer may have the impression that the object is too far or too close because his eyes must accommodate according to the distance or because of subjective reasons.

The image reproducing device of the invention, which is of the integral photography type, is characterized in that it comprises means for modifying the position of the reproduced object with respect to the device by controlling the direction of each light ray passing through a point of the passive array and through a corresponding point of the array representing the object.

In a preferred embodiment, the position is the distance to the eyes of the reproduced object and it is monitored by controlling the distance between the passive array of points and the array representing the object, such as a flat surface display (for example, a LCD).

This embodiment is particularly simple to realize.

In an other embodiment, for controlling the direction of light rays, means are provided for controlling the position of each point of the array representing the object on the surface of this array, and/or for controlling the position of each point of the passive array, in the surface of this passive array.

This embodiment may be used either to control the distance of the reproduced object to the eyes (or to the arrays) and/or to control the position of the reproduced object in a direction parallel to the surface of the array representing the object.

Other features and advantages of the invention will appear with the following description of some of its embodiments, this description being made with reference to the herein-appended drawings wherein:
figure 1, already described, represents an image capturing device of the integral photography type,
figure 2, already partly described, represents an image reproducing device including the improvement according to the invention,
figure 3 is a schematic view of control means of the reproducing device of fig 2, and
figure 4 is a block diagram of control means of an image-reproducing device according to the invention.

The image reproducing device according to the invention comprises means for modifying the position of the object with respect to the device itself which comprises the flat surface display (LCD 14) and the passive array 16.

This modification of position may be useful in several circumstances, for instance if the points A'5, A'7, B'3, B'6, etc. of the flat surface display 14 do not provide the desired position of the object, or if the virtual object P₁Q₁ does not appear at an optimum distance for the observer. For instance if, as shown on figure 2, the virtual image P₁Q₁ is too close from the eyes 20, 22 of the observer it is desirable to produce a virtual 3D image P'Q' which is at a greater distance from the eyes.

In this last example, and according to an embodiment, the distance d between the passive array 16 and the active array 14 is increased from d to d'.

With this increase of distance the direction of rays converging to P₁ and Q₁ is modified in such a way that they converge to P' and Q', i.e. the reproduced points P₁ and Q₁ are moved to P' and Q'. The consequence of the increase of distance d is that P and Q move to a position farther to flat surface display 14 and passive array 16.

In another embodiment (not shown) means are provided for modifying the relative positions of points A'5, B'3 and C'2 (for point P₁) in the plane of the flat surface display 14 in order that point P₁ be shifted to point P'. If the points a, b, c of array 16 are electronically controlled it is also possible to shift their relative positions in the plane of this array.

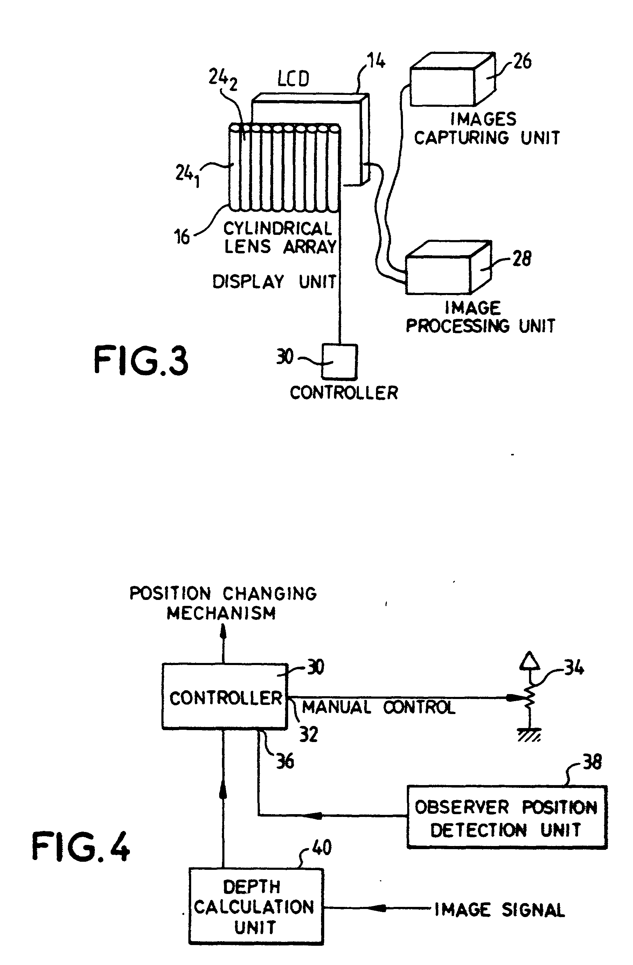

The embodiment represented on figure 3 is of the first kind, i.e. means are provided to modify the distance between the array 16 and the active array or flat surface display 14. In this example, the passive array is movable and the flat surface display is stationary. It is also possible to make the flat surface display movable. For certain applications this embodiment is preferable because the observer may not be confused by the movement of the array 16 which is not directly in front of his eyes; in other words it may be preferable to move display 14 rather than array 16, because the display 14 is not directly seen by the observer.

The passive array comprises, in this specific embodiment a plurality of cylindrical lenses 24₁, 24₂, etc.

The signals provided by the 3D image capturing unit 26 are transferred at the input of an image processing unit 28 which controls the flat surface display 14 in order that the pixels of this LCD provide the correct image of the original object. This processing is performed in real time, the reproducing apparatus being for animated pictures.

A controller 30 (figures 3 and 4) has an input 32 receiving a signal from a manual command device 34 under the control of an operator who provides command signals representing the direction desired for the movement of the object (farther or closer).

The controller 30 is also provided with an input 36 receiving a signal from a sensor 38 which detects the position of the head (or eyes) of the observer and this controller is associated with computing means 40 which calculate the optimum position of the reproduced object, i.e. the optimum distance d, in view of the position of the observer's eyes detected by sensor 38. For instance, the calculation unit may be programmed to set a constant distance between the scene (object) and the observer.

## Claims

1. A three dimensional (3D) display apparatus of the integral photography type comprising a passive array (16) of points (a, b, c) and an array (14) representing the image to be displayed, this second array comprising a set of subarrays (A', B', C'), each subarray being associated with a corresponding point of the passive array, and each point of each subarray containing an information about a point of the 3D image to be displayed, a light ray from a point (A'5) of a subarray to the associated point (a) of the passive array virtually converging to the corresponding point (P₁) of the 3D image to be displayed, characterized in that it comprises means for controlling the position of the 3D image (P₁Q₁) with respect to the arrays through the control of the direction of said light rays (A'5a, A'7a).

2. A 3D display apparatus according to claim 1, characterized in that it comprises means for controlling the distance between the passive array (16) and the second array (14).

3. A 3D display apparatus according to claim 2, characterized in that the passive array is moveable and the second array is stationary.

4. A 3D display apparatus according to any claims 1 to 3, characterized in that it comprises a manual controller (34) for controlling the position of the 3D image.

5. A 3D display according to any of the previous claims characterized in that it comprises means for controlling the position of each point of the passive array (16) and/or each point of the second array (14).

6. A 3D display according to claim 5 characterized in that said means for controlling the position of each point control the distance of the reproduced object to the arrays.

7. A 3D display according to claim 5 or 6 characterized in that said control means for controlling the position of each point control the position of the reproduced object in a direction parallel to the surface of the array representing the object.

8. A 3D display apparatus according to any of the previous claims, characterized in that it comprises means (38) for controlling the position of the 3D image in view of the position of the viewer.

9. A 3D display apparatus according to claim 8, characterized in that it comprises sensor means for detecting the position of the eyes of the viewer.

10. A 3D display apparatus according to any of the previous claims, characterized in that the second array is a flat surface display, such as a liquid crystal display.

11. A 3D display apparatus according to any of the previous claims, characterized in that each point of the passive array is an aperture of a plate, or a lens.
